# EUROPÄISCHE PATENTSCHRIFT

(11) **EP 1 940 527 B1**
(45) Veröffentlichungstag und Bekanntmachung des Hinweises auf die Patenterteilung: **06.04.2011**
(21) Anmeldenummer: 06818443.1
(22) Anmeldetag: 09.11.2006
(51) Int. Cl.: B01D 3/00, B01D 61/36

(54) **MEMBRAN-DESTILLATIONSVERFAHREN UND MEMBRAN-DESTILLATIONSVORRICHTUNG**
MEMBRANE DISTILLATION PROCESS AND MEMBRANE DISTILLATION DEVICE
PROCÉDÉ DE DISTILLATION À MEMBRANE ET DISPOSITIF DE DISTILLATION À MEMBRANE

(30) Priorität: 11.11.2005 DE 102005053874
(43) Veröffentlichungstag der Anmeldung: 09.07.2008
(73) Patentinhaber: AAA Water Technologies AG, 6330 Cham (CH)
(72) Erfinder: Heinzl, Wolfgang, 83561 Ramerberg (DE)
(74) Vertreter: Manitz, Finsterwald & Partner GbR
(86) Internationale Anmeldenummer: PCT/EP2006/010757
(87) Internationale Veröffentlichungsnummer: WO 2007/054311

(56) Entgegenhaltungen:
- EP-A2- 0 094 543
- WO-A-2005/089914
- JP-A- 63 162 002
- SCHNEIDER K ET AL: "MEMBRANDESTILLATION" CHEMIE INGENIEUR TECHNIK, WILEY VCH. VERLAG, WEINHEIM, DE, Bd. 56, Nr. 7, 1984, Seiten 514-521, XP000867616 ISSN: 0009-286X

## Beschreibung

Die Erfindung betrifft ein mehrstufiges Membrandestillationsverfahren, bei dem in einer jeweiligen Stufe eine aufzukonzentrierende Flüssigkeit durch eine dampfdurchlässige, flüssigkeits- oder wasserdichte Membran oder Membranwand von einem Dampfraum getrennt ist. Sie betrifft ferner eine mehrstufige Membrandestillationsvorrichtung mit entsprechenden Stufen.

Bei der Destillation wird Flüssigkeit verdampft und der Dampf kondensiert. Sie eignet sich zur Trennung von Flüssigkeiten mit unterschiedlichem Dampfdruck und zur ganzen oder teilweisen Abtrennung von Flüssigkeiten aus Salzlösungen.

Eine umsetzbare, machbare und praktikable Destillationsvorrichtung muss sowohl kostengünstig als auch energieeffizient sein. Nur wenn beide Bedingungen erfüllt sind, ist ein Destillationsprozess sinnvoll.

Bei klassischen thermischen Destillationsverfahren wie der Multi-Effekt- oder der Mehrstufenentspannungsverdampfung und thermomechanischen Verfahren wie der Brüdenverdichtung sind die aufzukonzentrierende Flüssigkeit und der Dampf in einem Raum und im wesentlichen auf dem selben Absolutdruck.

Bei den Membrandestillationsverfahren ist die aufzukonzentrierende Flüssigkeit zumindest auf einer Seite durch eine dampfdurchlässige, flüssigkeitsdichte Membran begrenzt. An diese Membranwand schließt sich ein Dampfraum an, der sich auf einem niedrigeren Dampfdruck befindet als die aufzukonzentrierende Flüssigkeit. Durch die Druckdifferenz entsteht an der Grenzfläche der aufzukonzentierenden Flüssigkeit zur Membran Dampf, der durch die Membran hindurchtritt.

Bei den bekannten Membrandestillationsverfahren wird der Dampf auf der von der Flüssigkeit abgewandten Seite der Membran im kälteren angrenzenden Kondensat niedergeschlagen, oder der Dampf kondensiert an einer kälteren Oberfläche im Dampfraum, oder er wird abgesaugt und außerhalb kondensiert.

Bei der Membrandestillation wird ein poröses dampfdurchlässiges Material benutzt. In der US 3340186 ist eine Vorrichtung beschrieben, die eine luftgefüllte mikroporöse, hydrophobe Membran benutzt. Das hier beschriebene Verfahren basiert auf einer Direktkontakt-Membrandestillation Der warme Meerwasserstrom und der kalte Destillatstrom sind in direktem Kontakt mit der Membran.

In der EP-A-0 088315 ist eine Vorrichtung zur kontinuierlichen Destillation einer heißen salzhaltigen Lösung oder von Flüssigkeitsgemischen mit unterschiedlichem Dampfdruck beschrieben.

Diese Vorrichtung besteht aus einer thermisch leitenden dampfundurchlässigen Schicht, die eine langgestreckte Wand bildet, einer hydrophoben dampfdurchlässigen Membran die eine benachbarte oder gegenüberliegende Wand bildet und zusammen mit der dampfundurchlässigen Schicht eine längsgestreckte Destillatsamrnelkammer oder -kanal bildet. Die Kammer besitzt einen Auslass für das Destillat. Bei einer bevorzugten Ausführung dieser Membrandestillation wird eine Spiralwickelkonfiguration eingesetzt. Kaltes Meerwasser oder Feed strömt in einer spiralförmigen Kammer in das Zentrum und nimmt dabei Wärme von der Kondensationsfläche auf. Das durch den Kondensationsvorgang des Destillats vorgewärmte Feed wird nun durch eine Heizung weiter erwärmt und dann in den Konzentratkanal geführt. Die heiße Lösung strömt dann durch den von der Membran begrenzten Kanal nach außen. Beim Durchströmen des Konzentratkanal verdampft ein Teil der Lösung durch die Membran.

In der EP-A-1185356 ist ein Verfahren zur Reinigung einer Flüssigkeit durch Membrandestillation beschrieben, bei dem Dampf aus einem

Flüssigkeitsstrom entsteht und eine den Flüssigkeitsstrom begrenzende poröse Wand passiert. Der Dampf kondensiert an einer kühlen Kondensatoroberfläche, wodurch Kondensatstrom gebildet wird. Die Kondensatoroberfläche trennt einen zugeführten Flüssigkeitsstrom vom Destillatstrom. Dieser zugeführte Flüssigkeitsstrom strömt im Gegenstrom zum dampfabgebenden Flüssigkeitsstrom. Um den Destillatstrom pro treibender Krafteinheit zu vergrößern, wird im Gaskanal ein Druck aufrechterhalten, der unter dem Umgebungsdruck, jedoch über dem Dampfdruck der den Dampf abgebenden Flüssigkeit liegt.

In Zusammenhang mit den bekannten Membrandestillationsverfahren ergibt sich nun eine Reihe von Problemen.

Bei allen bekannten Membrandestrillationsverfahren, bei denen ein Dampfraum eingesetzt wird, ist dieser Dampfraum durch eine dampfdurchlässige wasserdichte Membran von der zu verdampfenden Flüssigkeit getrennt. Dies führt bei allen bekannten Membrandestillationsverfahren dazu, dass der Dampfraum und der durch die dampfdurchlässige flüssigkeitsdichte Membran begrenzte, die aufzukonzentrierende Flüssigkeit enthaltende Raum sich auf unterschiedlichen Absolutdrücken befinden.

Bei Membrandestillationsverfahren, bei denen sich der Dampfraum auf einem Druck in der Nähe des Umgebungsdrucks befindet, ist die Lösung auf einem Druckniveau oberhalb des Umgebungsdrucks, wobei sich dieses Druckniveau zusammensetzt aus dem statischen Druck und dem hydraulischen Druckverlust. Dies führt zu einer Absolutdruckdifferenz - zwischen dem die zu verdampfende Flüssigkeit enthaltenden Raum und dem durch die dampfdurchlässige flüssigkeitsdichte Membran abgetrennten, den Dampf enthaltenden Raum.

Bei Membrandestillationsverfahren, bei denen sich der Dampfraum auf einem Druckniveau unterhalb des Umgebungsdrucks befindet, wird die Absolutdruckdifferenz zwischen dem die aufzukonzentrierende Flüssigkeit enthaltenden Raum und dem durch die dampfdurchlässige flüssigkeitsdichte Membran abgetrennten, den Dampf enthaltenden Raum noch um den Unterdruck vergrößert.

Diese Druckdifferenz zwischen dem die aufzukonzentrierende Flüssigkeit enthaltenden Raum und dem Dampfraum, in vielen Anwendungsfällen noch einhergehend mit einer Temperaturbeanspruchung der dampfdurchlässigen flüssigkeitsdichten Membran durch die erwärmte aufzukonzentrierende Flüssigkeit, führt zu einer hohen mechanischen und thermischen Beanspruchung der Membran. Dies verkürzt die Standzeit der meist aus Kunststoff bestehenden Membran wesentlich.

Ein weiteres Problem ergibt sich bei Membrandestillationsverfahren, bei denen die Wärmeübertragung im wesentlichen durch Kondensation und anschließende Verdampfung erfolgt. Erfolgt nämlich der Wärmetransport durch den Flüssigkeitsraum, der auf einer Seite durch eine dampfdurchlässige flüssigkeitsdichte Membran und auf der anderen Seite durch eine dampf- und flüssigkeitdsdichte Kondensationsfläche begrenzt ist, im wesentlichen nur durch Wärmeleitung in der Flüssigkeit, so kann im Verhältnis zur Kondensation und Verdampfung nur eine geringe Wärmemenge übertragen werden. Der Kondensationswärme vergleichbare Wärmemengen können im die aufzukonzentrierende Flüssigkeit enthaltenden Raum nur übertragen werden, wenn in diesem Raum ein Sieden erreicht werden kann.

In der WO-A-2005/089914 ist ein mehrstufiges Membrandestillationsverfahren beschrieben, bei dem einem ersten Dampfraum einer ersten Stufe Dampf zugeführt wird, der an den ersten Dampfraum begrenzenden Kondensationswänden kondensiert, an die auf der dem ersten Dampfraum gegenüberliegenden Seite jeweils ein eine aufzukonzentrierende Flüssigkeit führender Strömungskanal angrenzt, der auf der der betreffenden Kondensationswand gegenüberliegenden Seite durch eine dampfdurchlässige, jedoch flüssigkeitsdichte Membranwand begrenzt ist, durch die die aufzukonzentrierende Flüssigkeit von einem zweiten Dampfraum dieser ersten Stufe getrennt wird. Dabei tritt der aus der aufzukonzentrierenden Flüssigkeit entstehende Dampf durch die Membranwand hindurch in den zweiten Dampfraum. Der Dampf aus dem zweiten Dampfraum der ersten Stufe wird in einen ersten Dampfraum einer zweiten Stufe überführt, der durch Kondensationswände begrenzt ist, an denen der Dampf kondensiert und an die auf der dem Dampfraum gegenüberliegenden Seite jeweils ein die aufzukonzentrierende Flüssigkeit führender Strömungskanal angrenzt, der auf der der betreffenden Kondensationswand gegenüberliegenden Seite wieder durch eine Membranwand begrenzt und von einem zweiten Dampfraum der zweiten Stufe getrennt ist. In den verschiedenen Stufen verdampft jeweils nur ein Teil der Flüssigkeit aus dem die jeweilige Membran berührenden Flüssigkeitsstrom. Im zweiten Dampfraum der verschiedenen Stufen liegt der Absolutdruck an allen Stellen unterhalb des Umgebungsdrucks.

Bei einem aus der EP-A-0 094 543 bekannten Membrandestillationsverfahren wird der aus der Lösung durch eine poröse Trennwand hindurchtretende Dampf bevorzugt ummittelbar an der der Destillatseite zugewandten Oberfläche der porösen Trennwand kondensiert, wobei jedoch auch die Möglichkeit erwähnt wird, das Destillat zunächst dampfförmig von der porösen Trennwand wegzuleiten und an anderer Stelle zu kondensieren. Auf der Destillatseite soll möglichst kein Unterdruck vorherrschen. Vielmehr soll auf der Lösungsseite bereits ein solcher Unterdruck im Vergleich zum Umgebungsdruck erzeugt werden, wobei es ausreichen soll, wenn durch eine solche Druckabsenkung auf der Lösungsseite in einem Teilbereich der unmittelbaren Umgebung der porösen Trennwand der Siedepunkt der Lösung erreicht wird. Es wird davon ausgegangen, dass eine Erhöhung der durch die Poren der porösen Trennwand zur Destillatseite hindurchdiffundierenden Destillatmenge auch dann stattfindet, wenn nur auf der Lösungsseite ein Unterdruck bzw. im unmittelbaren Bereich der porösen Trennwand der Siededruck eingestellt wird. Zur Vermeidung einer zu hohen mechanischen Beanspruchung der porösen Trennwand wird eine Verstärkung dieser porösen Trennwand oder als vorteilhafte Alternative vorgeschlagen, den hydrostatischen Druck auf den beiden Seiten der porösen Trennwand auf etwa das gleiche niedrige Niveau einzustellen.

Der Erfindung liegt die Aufgabe zugrunde, ein verbessertes Verfahren sowie eine verbesserte Vorrichtung der eingangs genannten Art zu schaffen, bei denen die zuvor genannten Probleme beseitigt sind.

Bezüglich des Verfahrens wird diese Aufgabe erfindungsgemäß durch ein mehrstufiges Membrandestillations verfahren mit den Merkmalen des Anspruchs 1 gelöst.

Dabei wird der Druck der aufzukonzentrierenden Flüssigkeit auf den Unterdruck des Destillationsverfahrens abgesenkt.

Die Flüssigkeiten, die in den Unterdruckbereich des Destillationsverfahrens eintreten und aus diesem austreten, sind vorteilhafterweise vom Umgebungsdruck abgetrennt.

Der Absolutdruck der aufzukonzentrierenden Flüssigkeit wird bis zu ihrem zu ihrer Temperatur korrespondierenden Siededampfdruck oder darunter abgesenkt.

Von Vorteil ist, wenn die Flüssigkeiten dem Membrandestillationsverfahren so zugeführt und abgeführt werden, dass die Druckdifferenz zwischen dem Absolutdruck des Membrandestillationsverfahrens und dem Umgebungsdruck erhalten bleibt.

Der Druck in dem der aufzukonzentrierenden Flüssigkeit über die Membran bzw. die Membranwand benachbarten Dampfraum wird geringer gewählt als der Umgebungsdruck. Dabei entspricht der Unterdruck in dem Dampfraum im wesentlichen dem Dampfdruck der über die Membran bzw. Membranwand benachbarten aufzukonzentrierenden Flüssigkeit, erhöht durch den sich beim Strömen des Dampfes durch die Membran bzw. Membranwand ergebenden Differenzdruck.

Es findet in wenigstens zwei Stufen eine jeweilige Kondensation und Verdampfung statt.

Damit wird dem Umstand Rechnung getragen, dass die Anzahl der Stufen den Energiebedarf des Membrandestillationssystems beeinflusst und mit zunehmender Stufenzahl der Energiebedarf dieses Membrandestillationssystems abnimmt, da ja mit jeder weiteren Stufe eine erneute Kondensation und Verdampfung

Die Kondensation und Verdampfung in einer jeweiligen weiteren Stufe erfolgt auf einem niedrigeren Druckniveau und Temperaturniveau als in der jeweiligen vorangehenden Stufe.

Mit dem erfindungsgemäßen Verfahren werden also insbesondere die Drücke von Dampf und Flüssigkeiten aneinander angepasst. Zudem wird der Wärmeübergang in der aufzukonzentrierenden Flüssigkeit verbessert. Der Absolutdruck in dem die aufzukonzentrierende Flüssigkeit enthaltenden Raum wird auf einen Wert gebracht, der zumindest gleich oder annähernd dem Absolutdruck des den Dampf enthaltenden Raumes ist.

Dabei ist das Verfahren insbesondere so ausgestaltet,
a) dass auf die aufzukonzentierende Flüssigkeit ein Unterdruck aufgegeben wird der den Absolutdruck der aufzukonzentrierenden Flüssigkeit absenkt,
b) dass der Druck der aufzukonzentierenden Flüsigkeit auf einen Unterdruck, insbesondere auf den Unterdruck des Destillationsverfahrens, abgesenkt wird,
c) dass die Flüssigkeiten, die in den Unterdruckbereich des Destillationsverfahrens eintreten und aus diesem austreten, vom Umgebungsdruck abgetrennt sind, und/ oder
d) dass der Absolutdruck der Flüssigkeit insbesondere bis zu ihrem zu ihrer Temperatur korrespondierenden Siededampfdruck oder darunter abgesenkt wird.

Der Absolutdruck der Flüssigkeiten, die in das Membrandestillationsverfahren eintreten, ist insbesondere so eingestellt, dass er im wesentlichen dem Druck in der betreffenden Membrandestillationsvorrichtung entspricht.

Beim vorliegenden Membrandestillationsverfahren mit einem Dampfraum wird der Absolutdruck in der aufzukonzentierenden Flüssigkeit so eingestellt, dass er dem Absolutdruck des Dampfraums im wesentlichen entspricht.

Die im Zusammenhang mit den bekannten Verfahren genannten Probleme können also unter anderem beispielsweise durch die folgenden Schritte beseitigt werden:

Ein aufzukonzentierender Flüssigkeitsstrom, der in das Membrandestillationsverfahren eintritt, befindet sich im wesentlichen auf dem gleichen Druck wie der Absolutdruck des Dampfraumes des Membrandestillationsverfahrens. Die aufkonzentrierte Flüssigkeit und das entstehende Destillat befinden sich ebenfalls im wesentlichen auf einem Druck wie der Dampfraum. Die das Membrandestillationsverfahren verlassenden Flüssigkeiten werden nach dem Verlassen des Membrandestillationserfahrens wieder auf den Umgebungsdruck gebracht.

Ein Druckausgleich zwischen dem sich auf einem Unterdruck befindlichen Dampfraum und der aufzukonzentriererenden Flüssigkeit wird z.B. über eine Unterdruckverbindungsleitung zwischen der zugeführten Flüssigkeit und dem Dampfraum erreicht. Die Unterdruckverbindungsleitung kann insbesondere mit einem in die Leitung integrierten U-Rohr so ausgebildet sein, das den Übertritt der zugeführten aufzukonzentrierenden Flüssigkeit in den Dampfraum verhindert.

In der Leitung, in der die aufzukonzentierende Flüssigkeit beispielsweise mittels einer Zuführpumpe zugeführt wird, und in der Leitung, in der die aufkonzentrierte Flüssigkeit mit der Konzentratpumpe abgeführt wird, können U-Rohre eingebaut sein, um den Unterdruck in der betreffenden Destillationsvorrichtung vom Umgebungsdruck abzutrennen.

In der Leitung, mit der das in der Destillationsvorrichtung erzeugte Destillat mit der Destillatpumpe nach aussen in den Umgebungsdruck gepumpt wird, kann auch ein U-Rohr eingebaut sein, das den Unterduck der Destillationsvorrichtung gegen den Unterdruck der Umgebung abtrennt.

Bezüglich der Membrandestillationsvorrichtung wird die weiter oben angegebene Aufgabe erfindungsgemäß entsprechend durch eine mehrstufige Membrandestillations vorrichtung mit den Merkmalen des Anspruchs 2 gelöst.

Bevorzugte Ausführungsformen der erfindungsgemäßen Membrandestillationsvorrichtung sind in den Unteransprüchen angegeben.

Die Membrandestillationsvorrichtung ist also insbesondere so ausgeführt,
a) dass auf die aufzukonzentierende Flüssigkeit ein Unterdruck aufgegeben wird, der den Absolutdruck der aufzukonzentrierenden Flüssigkeit absenkt,
b) dass die Flüssigkeiten, die in den Unterdruckbereich eintreten, durch Bauelemente vom Umgebungsdruck abgetrennt sind,
c) dass der Absolutdruck der Flüssigkeit insbesondere bis zu ihrem, zu ihrer Temperatur korrespondierenden, Siededampfdruck oder darunter abgesenkt wird, und/oder
d) dass die in den Unterdruckraum eintretenden und austretenden Flüssigkeiten durch Einbauten vom Umgebungsdruck abgetrennt sind.

Ein Druckausgleich zwischen dem sich auf einem Unterdruck befindlichen Dampfraum und der aufzukonzentrierenden Flüssigkeit kann z.B. über eine Unterdruckverbindungsleitung zwischen der zugeführten aufzukonzentrierenden Flüssigkeit und dem Dampfraum erreicht werden. Die Unterdruckverbindungsleitung kann insbesondere mit einem in die Leitung integrierten U-Rohr so ausgebildet sein, dass der Übertritt der zugeführten Flüssigkeit in den Dampfraum verhindert wird.

In einer Leitung, in der die aufzukonzentierende Flüssigkeit mit der Flüssigkeitspumpe zugeführt wird, und in einer Leitung, in der die aufkonzentrierte Flüssigkeit mit der Konzentratpumpe abgeführt wird, können U-Rohre eingebaut sein, um den Unterdruck in der Destillationsvorrichtung vom Umgebungsdruck abzutrennen.

In einer Leitung, mit der das in der Destillationsvorrichtung erzeugte Destillat z.B. mittels einer Destillatpumpe nach außen in den Umgebungsdruck gepumpt wird, kann auch ein U-Rohr eingebaut sein, das den Unterduck der Destillationsvorrichtung gegen den Unterdruck der Umgebung abtrennt.

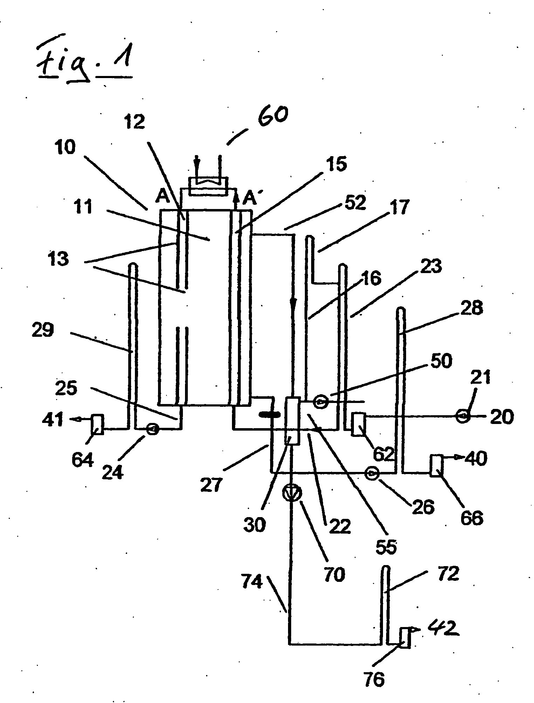

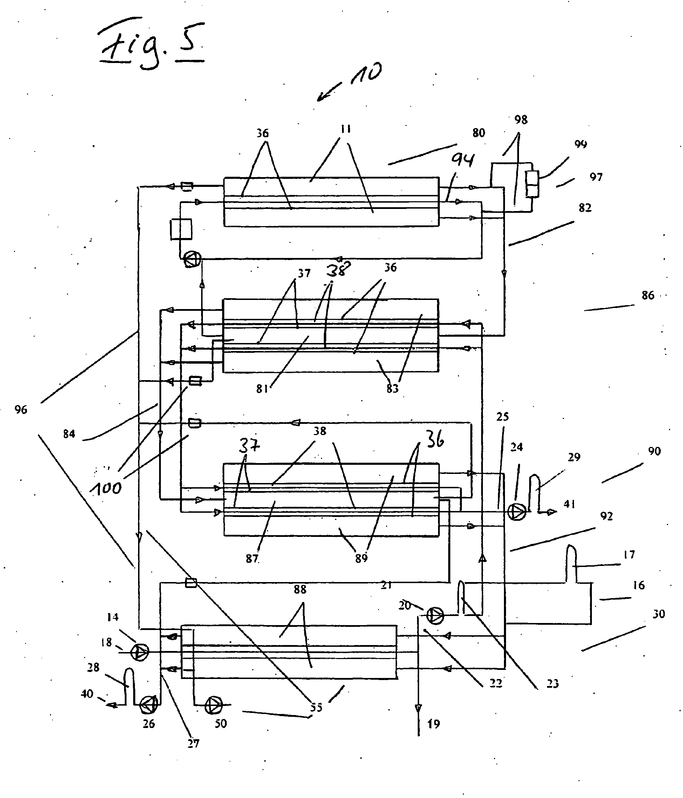

Die Erfindung wird im Folgenden anhand eines Ausführungspeispiels unter Bezugnahme auf die Zeichnung näher erläutert in der lediglich in der Figur 5 ein Ausführungsbeispiel der vorliegenden Erfindung wiedergegeben ist, während die Ausführungsformen der Figuren 1 bis 4 lediglich der Erläuterung dienen; in der Zeichnung zeigen:
Figur 1 eine beispielhafte Ausführungsform, bei der die Membrandestillationsvorrichtung dampfdurchlässige, flüssigkeitsdichte Hohlfäden und dampf- und flüssigkeitsdichte Kondensationsrohre enthält,
Figur 2 eine beispielhafte Ausführungsform, bei der die Membrandestillationsvorrichtung eine Spiraleinheit umfasst und die Druckabtrennung der Flüssigkeiten mittels U-Rohren erfolgt,
Figur 3 eine beispielhafte Ausführungsform, bei der die Membrandestillationsvorrichtung eine Doppelspiraleinheit umfasst und die Druckabtrennung der Flüssigkeiten mit U-Rohren erfolgt,
Figur 4 eine beispielhafte Ausführungsform, bei der die Membrandestillationsvorrichtung eine Doppelspiraleinheit umfasst und die Druckabtrennung der aufzukonzentrierenden Flüssigkeit mit U-Rohren erfolgt, und
Figur 5 eine beispielhafte Ausführungsform einer erfindungsgemäßen Membrandestillationsvorrichtung mit jeweils zwei der Kondensation und Verdampfung dienenden Stufen.

Bei den Ausführungsformen der Figur 1 ,2 und 3 wird auf die aufzukonzentierende Flüssigkeit ein Unterdruck aufgegeben, der den Absolutdruck der aufzukonzentrierenden Flüssigkeit absenkt. Dabei kann Druck der aufzukonzentierenden Flüssigkeit insbesondere auf den Unterdruck des Destillationsverfahrens abgesenkt werden. Die Flüssigkeiten, die in den Unterdruckbereich des Destillationsverfahrens ein- und austreten, sind zweckmäßigerweise vom Umgebungsdruck abgetrennt. Der Absolutdruck der aufzukonzentrierenden Flüssigkeit kann insbesondere bis zu ihrem zu ihrer Temperatur korrespondierenden Siededampfdruck oder darunter abgesenkt werden.

Dabei kann auf die aufzukonzentierende Flüssigkeit über die ein U-Rohr enthaltende Verbindungsleitung ein Unterdruck aufgegeben werden, der den Absolutdruck der Flüssigkeit absenkt. Die die in den Unterdruckbereich eintretenden und die aus dem Unterdruckbereich austretenden Flüssigkeiten können insbesondere durch in die Leitungen eingebaute U-Rohre vom Umgebungsdruck abgetrennt sein. Der Absolutdruck der aufzukonzentrierenden Flüssigkeit wird abgesenkt, insbesondere bis zu ihrem zu ihrer Temperatur korrespondierenden Siededampfdruck oder darunter.

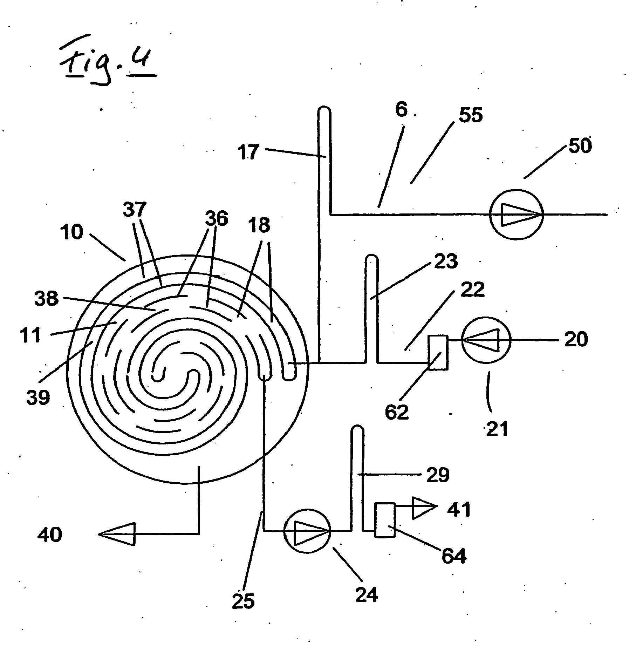

Gemäß der Ausführungsform nach der Figur 4 kann auf die aufzukonzentierende Flüssigkeit über die ein U-Rohr enthaltende Verbindungsleitung ein Unterdruck aufgegeben werden, der den Absolutdruck der Flüssigkeit absenkt. Die die in den Unterdruckbereich eintretenden und die aus diesem austretenden Flüssigkeiten können insbesondere durch in die Leitungen eingebaute U-Rohre vom Umgebungsdruck abgetrennt sein.

Figur 1 zeigt in schematischer Darstellung eine beispielhafte Ausführungsform einer Membrandestillationsvorrichtung 10, bei der ein Dampfraum 11 im Unterdruck und die aufzukonzentierende Flüssigkeit 20 von Hohlfäden 12 begrenzt ist, deren Wand durch eine dampfdurchlässige, flüssigkeitsdichte Membran 13 gebildet ist. Die durch die Membran-destillationsvorrichtung 10 strömende aufzukonzentierende und vorzuwärmende Flüssigkeit 20 ist von einem flüssigkeits- und dampfdichten Metall- oder Kunststoffrohr 15 begrenzt und verläuft durch den gleichen Dampfraum 11 wie die dampfdurchlässigen, flüssigkeitsdichten Membranhohlfäden 12.

Der Dampfraum 11 befindet sich auf einem Unterdruck in der Nähe des Siededampfdruckes der über die dampfdurchlässige flüssigkeitsdichte Membran 13 benachbarten, aufzukonzentrierenden Flüssigkeit 20.

Ein Druckausgleich zwischen dem sich auf einem Unterdruck befindlichen Dampfraum 11 und der aufzukonzentrierenden Flüssigkeit 20 wird über eine Unterdruckverbindungsleitung 16 zwischen der aufzukonzentrierenden Flüssigkeit 20 und dem Dampfraum 11 erreicht. Um zu vermeiden, dass die zugeführte aufzukonzentierende Flüssigkeit 20 in den Dampfraum 11 über die Unterdruckverbindungsleitung 16 strömt, ist ein Teil der Unterdruckverbindungsleitung 16 als U-Rohr 17 ausgebildet.

Der Unterdruck wird mittels einer Vakuumpumpe 50 und eines Kondensators 30 erzeugt. Der Unterdruck wird über eine Unterdruckleitung 52 dem Dampfraum 11 aufgegeben. Die aufzukonzentrierende Flüssigkeit 20 wird mittels einer Zuführpumpe 21 über eine Flüssigkeitsleitung 22 der Membrandestillationsvorrichtung 10 zugeführt. Um den Unterdruck in der Membrandestillationsvorrichtung 10 gegen den Umgebungsdruck abzuschließen, ist ein Teil der Flüssigkeitsleitung 22 als U-Rohr 23 ausgelegt. Die aufkonzentrierte Flüssigkeit 41 wird mittels einer Konzentratpumpe 24 aus der Membrandestillationsvorrichtung 10 über eine Konzentratleitung 25 abgepumpt. Um die Membrandestillationsvorrichtung 10 gegen den Umgebungsdruck abzuschließen, ist ein Teil der Konzentratleitung 25 als U-Rohr 29 ausgelegt.

Das in der Membrandestillationsvorrichtung 10 entstandene Destillat 40 wird mittels einer Destillatpumpe 26 über eine Destillatleitung 27 abgepumpt. Um den Unterdruck der Membrandestillationsvorrichtung 10 gegen den Umgebungsdruck abzuschließen, ist ein Teil der Destillatleitung 27 als U-Rohr 28 ausgeführt.

Das im Kondensator 30 entstehende Destillat 42 wird mittels einer Destillatpumpe 70 über eine Destillatleitung 74, die ein U-Rohr 72 enthält, abgepumpt.

In den Leitungen 22, 25, 27 und 74 sind Vorlagebehälter 62, 64, 66 und 76 mit den entsprechenden Flüssigkeiten 20, 41 und 42 angebracht, die als Flüssigkeitsabschluss mit oder in den U-Rohren 23, 28, 29 und 72 den Unterdruck in den Leitungen 22, 25, 26 und 74 der Membrandestillationsvorrichtung 10 vom Umgebungsdruck abtrennen.

Die aufzukonzentrierende Flüssigkeit 20 wird in einem Wärmetauscher 60 beim Weg von A nach A' weiter erhitzt.

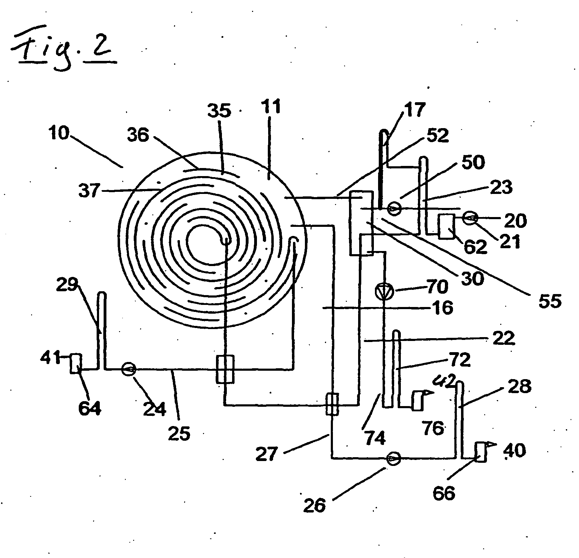

Figur 2 zeigt in schematischer Darstellung eine weitere beispielhafte Ausführungsform einer Membrandestillationsvorrichtung 10.

Die Membrandestillationsvorrichtung 10 umfasst hier eine Spiralwickelkonfiguration mit integrierter Wärmerückgewinnung.

Der Dampfraum 11 befindet sich auf einem Unterdruck in der Nähe des Siededampfdruckes, der über die dampfdurchlässige, flüssigkeitsdichte Membranwand 36 abgetrennten benachbarten, aufzukonzentrierenden Flüssigkeit 20.

Hier wird ein Strömungskanal 35 für die aufzukonzentierende Flüssigkeit 20 auf der einen Seite von einer dampfdurchlässigen flüssigkeitsdichten Membranwand 36 und auf der ihr gegenüberliegenden Seite von einer dampf- und flüssigkeitsdichten Kondensationswand 37 begrenzt. Durch die Spiralwickelkonfiguration liegt die dampfdurchlässige flüssigkeitsdichte Membranwand 36 über den Dampfraum 11 hinweg der dampf- und flüssigkeitsdichten Kondensation 37 der nächstfolgenden äußeren Spiralwindung gegenüber.

Der Unterdruck wird mittels der Vakuumpumpe 50 und des Kondensators 30 erzeugt. Der Unterdruck wird über die Unterdruckleitung 52 dem Dampfraum 11 aufgegeben.

Ein Druckausgleich zwischen dem sich auf einem Unterdruck befindlichen Dampfraum 11 und der aufzukonzentrierenden Flüssigkeit 20 wird über eine Unterdruckverbindungsleitung 16 zwischen der zugeführten Flüssigkeit 20 und dem Dampfraum 11 erreicht.

Um zu vermeiden, dass die zugeführte aufzukonzentierende Flüssigkeit 20 in den Dampfraum 11 über die Unterdruckverbindungsleitung 16 strömt, ist ein Teil der Unterdruckverbindungsleitung 16 als U-Rohr 17 ausgebildet.

Die aufzukonzentrierende Flüssigkeit 20 wird mittels der Zuführpumpe 21 über die Flüssigkeitsleitung 22 der Membrandestillationsvorrichtung 10 zugeführt. Um den Unterdruck in der Membrandestillationsvorrichtung 10 gegen den Umgebungsdruck abzugrenzen, ist ein Teil der Flüssigkeitsleitung 22 als U-Rohr 23 ausgelegt. Die aufkonzentrierte Flüssigkeit 41 wird mittels der Konzentratpumpe 24 aus der Membrandestillationsvorrichtung 10 über die Konzentratleitung 25 abgepumpt. Um die Membrandestillations-vorrichtung 10 gegen den Umgebungsdruck abzuschließen, ist ein Teil der Konzentratleitung 25 als U-Rohr 29 ausgelegt.

Das in der Membrandestillationsvorrichtung 10 entstandene Destillat 40 wird mittels der Destillatpumpe 26 über die Destillatleitung 27 abgepumpt. Um den Unterdruck der Membrandestillationsvorrichtung 10 gegen den Umgebungsdruck abzuschließen, ist ein Teil der Destillatleitung 27 als U-Rohr 28 ausgeführt.

Das im Kondensator 30 entstehende Destillat 42 wird mittels der Destillatpumpe 70 über die Destillatleitung 74, die das U-Rohr 72 enthält, abgepumpt.

In den Leitungen 22, 25, 27 und 74 sind Vorlagebehälter 62, 64, 66 und 76 mit den entsprechenden Flüssigkeiten 20, 41 und 42 angebracht, die als Flüssigkeitsabschluss mit oder in den U-Rohren 23, 28, 29 und 72 den Unterdruck in den Leitungen 22, 25, 26 und 74 der Membrandestillationsvorrichtung 10 vom Umgebungsdruck abtrennen.

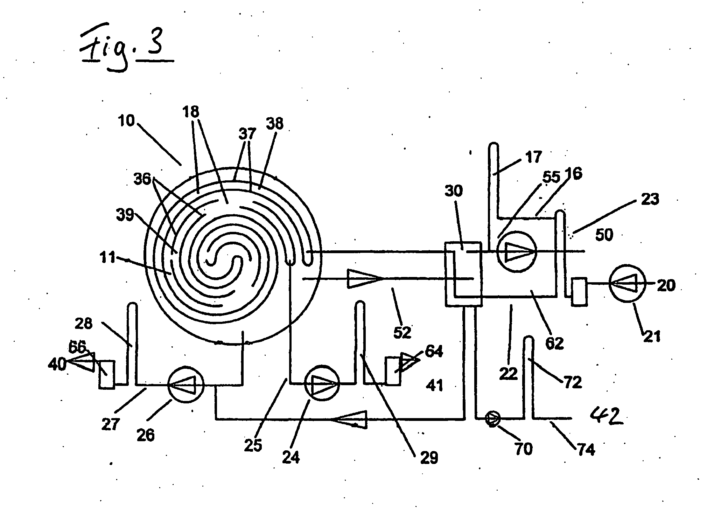

Figur 3 zeigt in schematischer Darstellung eine weitere beispielhafte Ausführungsform einer Membrandestillationsvorrichtung 10.

Die Membrandestillationsvorrichtung 10 umfasst hier eine Doppelspiralwickelkonfiguration mit integrierter Wärmerückgewinnung. Dabei bilden zwei benachbarte dampf- und flüssigkeitsdichte Kondensationswände 37 aus Metall oder Kunststoff einen Strömungskanal 38 für die zuströmende aufzukonzentrierende Flüssigkeit 20, während zwei benachbarte dampfdurchlässige flüssigkeitsdichte Membranwände 36 einen Strömungskanal 39 für die aufkonzentrierte Flüssigkeit 41 bilden.

Zwischen den benachbarten Doppelspiralen ist der Dampfraum 11 ausgebildet, der dampfgefüllt ist und in dem sich unten das im Dampfraum 11 bei der Kondensation an den Kondensationswänden 37 entstehende nach außen fließende Destillat 40 sammelt.

Durch die Spiralwickelkonfiguration liegt die dampfdurchlässige flüssigkeitsdichte Membranwand 36 über den Dampfraum hinweg der dampf- und flüssigkeitsdichten Kondensationswand 37 der nächstfolgenden Spiralwindung gegenüber.

Der Dampfraum 11 befindet sich auf einem Unterdruck in der Nähe des Siededampfdruckes der über die dampfdurchlässige flüssigkeitsdichte Membran 36 benachbarten aufzukonzentrierenden Flüssigkeit 20.

Der Unterdruck wird mittels der Vakuumpumpe 50 und des Kondensators 30 erzeugt. Der Unterdruck wird über die Unterdruckleitung 52 dem Dampfraum 11 aufgegeben. Ein Druckausgleich zwischen dem sich auf einem Unterdruck befindlichen Dampfraum 11 und der verwendeten Flüssigkeit 20 wird über eine Unterdruckverbindungsleitung 16 zwischen der zugeführten aufzukonzentrierenden Flüssigkeit 20 und dem Dampfraum 11 erreicht.

Um zu vermeiden, dass die zugeführte aufzukonzentierende Flüssigkeit 20 in den Dampfraum 11 über die Verbindungsleitung 16 strömt, ist ein Teil der Verbindungsleitung 16 als U-Rohr 17 ausgebildet.

Die aufzukonzentrierende Flüssigkeit 20 wird mittels der Zuführpumpe 21 über die Flüssigkeitsleitung 22 der Membrandestillationsvorrichtung 10 zugeführt. Um den Unterdruck in der Membrandestillationsvorrichtung 10 gegen den Umgebungsdruck abzugrenzen, ist ein Teil der Flüssigkeitsleitung 22 als U-Rohr 23 ausgelegt. Die aufkonzentrierte Flüssigkeit 41 wird mittels der Konzentratpumpe 24 aus der Membrandestillationsvorrichtung 10 über die Konzentratleitung 25 abgepumpt. Um die Membrandestillationsvorrichtung 10 gegen den Umgebungsdruck abzuschließen, ist ein Teil der Konzentratleitung 25 als U-Rohr 29 ausgelegt.

Das in der Membrandestillationsvorrichtung 10 entstehende Destillat 40 wird mittels der Destillatpumpe 26 über die Destillatleitung 27 abgepumpt. Um den Unterdruck der Destillationsvorrichtung 10 gegen den Umgebungsdruck abzuschließen, ist ein Teil der Destillatleitung 27 als U-Rohr 28 ausgeführt.

Das in der Membrandestillationsvorrichtung 10 entstandene Destillat 40 wird mittels der Destillatpumpe 26 über die Destillatleitung 27 abgepumpt. Um den Unterdruck der Membrandestillationsvorrichtung 10 gegen den Umgebungsdruck abzuschließen, ist ein Teil der Destillatleitung 27 als U-Rohr 28 ausgeführt.

Das im Kondensator 30 entstehende Destillat 42 wird mittels der Destillatpumpe 70 über die Destillatleitung 74, die das U-Rohr 72 enthält, abgepumpt.

In den Leitungen 22, 25, 27 und 74 sind Vorlagebehälter 62, 64, 66 und 76 mit den entsprechenden Flüssigkeiten 20, 41 und 42 angebracht, die als Flüssigkeitsabschluss mit oder in den U-Rohren 23, 28 ,29 und 72 den Unterdruck in den Leitungen 22, 25, 26 und 74 der Membrandestillationsvorrichtung 10 vom Umgebungsdruck abtrennen.

Figur 4 zeigt in schematischer Darstellung eine weitere beispielhafte Ausführungsform einer Membrandestillationsvorrichtung 10.

Diese Membrandestillationsvorrichtung 10 umfasst eine Doppelspiralwickelkonfiguration mit integrierter Wärmerückgewinnung. Zwei benachbarte dampf- und flüssigkeitsdichte Kondensationswände 37 aus Metall oder Kunststoff bilden den Strömungskanal 38 für die zuströmende aufzukonzentrierende Flüssigkeit 20, während zwei benachbarte dampfdurchlässige flüssigkeitsdichte Membranwände 36 den Strömungskanal 39 für die aufkonzentrierte Flüssigkeit 41 bilden. Zwischen den benachbarten Doppelspiralen ist der Dampfraum 11 ausgebildet, der dampfgefüllt ist und in dem sich unten das im Dampfraum 11 an den Kondensationswänden 37 entstehende und nach aussen abfließende Destillat 40 sammelt. Ist der Dampfraum 11 auf einem Druck in der Nähe des Umgebungsdruck, muss die aus dem hydraulischen und statischen Druck resultierende Belastung der Folien durch ein Unterdrucksystem ausgeglichen werde.

Dazu ist die Membrandestillationsvorrichtung 10 mit einem Vakuumsystem 55 zu versehen, das eine Vakuumpumpe 50 und eine Leitung 60 von der Vakuumpumpe 50 zur Flüssigkeitsleitung 22 der aufzukonzentrierenden Flüssigkeit 20 umfasst. Damit mit dem Unterdruck keine Flüssigkeit 20 angesaugt wird, ist ein Teil der zur Vakuumpumpe 50 führenden Leitung 61 als U-Rohr 17 ausgebildet.

Die aufzukonzentrierende Flüssigkeit 20 wird mittels der Zuführpumpe 21 über die Flüssigkeitsleitung 22 der Membrandestillationsvorrichtung 10 zugeführt. Um den Unterdruck in der Flüssigkeit 20 gegen den Umgebungsdruck abzugrenzen, ist ein Teil der Flüssigkeitsleitung 22 als U-Rohr 23 ausgelegt. Die aufkonzentrierte Flüssigkeit 41 wird mittels der Konzentratpumpe 24 aus der Membrandestillationsvorrichtung 10 über die Konzentratleitung 25 abgepumpt. Um den Unterdruck in der aufzukonzentrierende Flüssigkeit 20 gegen den Umgebungsdruck abzuschließen, ist ein Teil der Konzentratleitung 25 als U-Rohr 29 ausgelegt.

In den Leitungen 22 und 25 sind Vorlagebehälter 62 und 64 mit den entsprechenden Flüssigkeiten 20, 41 und 42 angebracht, die als Flüssigkeitsabschluss mit oder in den U-Rohren 23 und 28 den Unterdruck in den Leitungen 22 und 25 der Membrandestillations-vorrichtung 10 vom Umgebungsdruck abtrennen

Das Destillat 40 befindet sich auf Umgebungsdruck und kann frei aus der Membran-destillationsvorrichtung 10 abfließen.

Figur 5 zeigt in schematischer Darstellung eine beispielhafte Ausführungsform der erfindungsgemäßen Membrandestillationsvorrichtung 10 mit einem Dampferzeuger 80, einer ersten Stufe 86, einer zweiten Stufe 90 und einem Kondensator 30. Alle diese Komponenten befinden sich auf einem Druckniveau unter dem Umgebungsdruck.

Der Absolutdruck im Dampfraum 11 des Dampferzeugers 80 befindet sich im wesentlichen auf dem Siededampfdruck der über die Membranwände 36 benachbarten Flüssigkeit. Durch ein Druckausgleichsystem 97, das eine Verbindungsleitung 98 zwischen einer Flüssigkeitsleitung 94 und einem zur Umgebung abgeschlossenen Behälter 99 umfasst, der teilweise mit der Flüssigkeit befüllt ist, und vom Behälter 99 zu einem Verbindungskanal 82 führt, wird der Absolutdruck der Flüssigkeit im Dampferzeuger 80 auf den Absolutdruck im Dampfraum 11 gebracht.

Dampf aus dem Dampfraum 11 des Dampferzeugers 80 strömt über den Verbindungskanal 82 in einen Dampfraum 81 der ersten Stufe 86, in der der Dampf an der Kondensationswänden 37 kondensiert. Das Kondensat wird in den Flüssigkeitskreislauf des Dampferzeugers 80 zurückgeführt.

In einem an die Membranwände 36 anschließenden Dampfraum 83 der ersten Stufe 86 ist der Absolutdruck geringer als der Dampfdruck in dem an die Kondensationsfläche 37 anschließenden Dampfraum 81. Der aus der Flüssigkeit 20 entstehende Dampf tritt durch die Membranwände 36 in den an die Membranwände 36 anschließenden Dampfraum 83.

Über einen Verbindungskanal 84 strömt der in der ersten Stufe 86 entstehende Dampf in den durch die Kondensationswände 37 begrenzten Dampfraum 87 der zweiten Stufe 90 und kondensiert an den Kondensationswänden 37. In einem an die Membranwände 36 anschließenden Dampfraum 89 der zweiten Stufe 90 ist der Absolutdruck geringer als der Dampfdruck in dem an die Kondensationsflächen 37 anschließenden Dampfraum 87.

Durch Wärmeleitung wird die bei der Kondensation des Dampfes freiwerdende Kondensationswärme über die Kondensationswände 37 übertragen und durch Dampferzeugung im Strömungskanal 38 und anschließenden Transport mit dem Dampf durch die Membranwände 36 in den durch die Membranwände 36 begrenzten Dampfraum 83 bzw. 89 übertragen. Über einen Verbindungskanal 92 strömt der in der zweiten Stufe 90 entstehende Dampf in den durch die Kondensationswände 37 begrenzten Dampfraum 88 des Kondensators 30 und kondensiert an den Kondensationswänden 37.

Das bei der Kondensation in der zweiten Stufe 90 und im Kondensator 30 entstehende Destillat 40 wird mittels der Destillatpumpe 26 nach außen abgepumpt.

Der Unterdruck in der gesamten Vorrichtung wird mittels des Vakuumsystems 55 aufgebracht, das ein Unterdruckrohrsystem 96, den Kondensators 30 und die Vakuumpumpe 50 umfasst.

Über das Unterduckrohrsystem 96 werden die aus der Flüssigkeit 20 freiwerdenden, nicht kondensierbaren Gase aus der Membrandestillationsvorrichtung 10 abgepumpt. Gleichzeitig wird der Unterdruck in den Komponenten Dampferzeuger 80, erste Stufe 86, zweite Stufe 90 und Kondensator 30 aufgebaut. Über Drosseln 100 wird der Unterdruck in den Komponenten Dampferzeuger 80, erste Stufe 86, zweite Stufe 90 und dem Kondensator 30 eingestellt.

Ein Druckausgleich zwischen dem sich auf einem Unterdruck befindlichen jeweiligen Dampfraum 83 bzw. 89 und der aufzukonzentrierenden Flüssigkeit 20 wird über eine Verbindungsleitung 16 zwischen der zugeführten aufzukonzentrierenden Flüssigkeit 20 und dem Verbindungskanal 92 erreicht.

Um zu vermeiden, dass die zugeführte aufzukonzentierende Flüsigkeit 20 in den Verbindungskanal 92 über die Verbindungsleitung 16 strömt, ist ein Teil der Verbindungsleitung 16 als U-Rohr 17 ausgebildet.

Von der dem Kondensator 30 mittels einer Pumpe 14 zugeführten Flüssigkeit 18 wird ein Teilstrom als aufzukonzentrierende Flüssigkeit 20 der Membrandestillationsvorrichtung 10 zugeführt. Der andere Teilstrom 19 wird verworfen.

Die aufzukonzentrierende Flüssigkeit 20 wird mittels der Zuführpumpe 21 über die Flüssigkeitsleitung 22 der Membrandestillationsvorrichtung 10 zugeführt. Um den Unterdruck in der Membrandestillationsvorrichtung 10 gegen den Umgebungsdruck abzugrenzen, ist ein Teil der Flüssigkeitsleitung 22 als U-Rohr 23 ausgelegt. Die aufkonzentrierte Flüssigkeit 41 wird mittels der Konzentratpumpe 24 aus der Membrandestillationsvorrichtung 10 über die Konzentratleitung 25 abgepumpt. Um die Membrandestillationsvorrichtung 10 gegen den Umgebungsdruck abzuschließen, ist ein Teil der Konzentratleitung 25 als U-Rohr 29 ausgelegt.

Um den Unterdruck der Membrandestillationsvorrichtung 10 gegen den Umgebungsdruck abzuschließen, ist zudem ein Teil der Destillatleitung 27 als U-Rohr 28 ausgeführt.

### Bezugszeichenliste

- 10: Membrandestillationsvorrichtung
- 11: Dampfraum
- 12: Membranhohlfäden
- 13: Membran
- 14: Pumpe
- 15: Metall- oder Kunststoffrohr, Kondensationsrohr
- 16: Unterdruckverbindungsleitung
- 17: U-Rohr
- 18: Flüssigkeit
- 19: Teilstrom
- 20: aufzukonzentrierende Flüssigkeit
- 21: Zuführpumpe
- 22: Flüssigkeitsleitung
- 23: U-Rohr
- 24: Konzentratpumpe
- 25: Konzentratleitung
- 26: Destillatpumpe
- 27: Destillatleitung
- 28: U-Rohr
- 29: U-Rohr
- 30: Kondensator
- 35: Strömungskanal
- 36: Membranwand
- 37: Kondensationswand
- 38: Strömungskanal
- 39: Konzentratströmungskanal
- 40: Destillat
- 41: aufzukonzentrierende Flüssigkeit, Konzentrat
- 42: Destillat
- 50: Vakuumpumpe
- 52: Unterdruckleitung
- 55: Vakuumsystem
- 60: Wärmetauscher
- 61: Leitung
- 62: Vorlagebehälter für das Feed U-Rohr
- 64: Vorlagebehälter für das Konzentrat U-Rohr
- 66: Vorlagebehälter für das Destillat-Rohr
- 70: Destillatpumpe
- 72: U-Rohr
- 74: Destillatleitung
- 76: Vorlagebehälter für das Destillat U-Rohr
- 80: Dampferzeuger
- 81: Dampfraum
- 82: Verbindungskanal
- 83: Dampfraum
- 84: Verbindungskanal
- 86: erste Stufe
- 87: Dampfraum
- 88: Dampfraum
- 89: Dampfraum
- 90: zweite Stufe
- 92: Verbindungskanal
- 94: Flüssigkeitsleitung
- 96: Unterdruckrohrsystem
- 97: Druckausgleichsystem
- 98: Verbindungsleitung
- 99: Behälter
- 100: Drosseln

## Patentansprüche

1. Mehrstufiges Membrandestillationsverfahren, bei dem einem ersten Dampfraum (81) einer ersten Stufe (86) Dampf aus einem Dampfraum (11) eines einen unabhängigen Flüssigkeitskreislauf aufweisenden Dampferzeugers (80) zugeführt wird, der an den ersten Dampfraum (81) begrenzenden Kondensationswänden (37) kondensiert, auf der dem ersten Dampfraum (81) gegenüberliegenden Seite der Kondensationswände grenzt jeweils ein eine aufzukonzentrierende Flüssigkeit (20) führender Strömungskanal (38) an, der auf der der betreffenden Kondensationswand (37) gegenüberliegenden Seite durch eine dampfdurchlässige flüssigkeits- oder wasserdichte Membranwand (36) begrenzt ist, durch die die aufzukonzentrierende Flüssigkeit (20) von einem zweiten Dampfraum (83) dieser ersten Stufe (86) getrennt wird, wobei der aus der aufzukonzentrierenden Flüssigkeit (20) entstehende Dampf durch die Membranwand (36) in den zweiten Dampfraum (83) hindurchtritt, und
zur Einstellung des Absolutdruckes der aufzukonzentrierenden Flüssigkeit (20) auf diese ein Unterdruck aufgegeben wird, der den Absolutdruck der aufzukonzentrierenden Flüssigkeit (20) absenkt, wobei
der Dampf aus dem zweiten Dampfraum (83) der ersten Stufe (86) in einen ersten Dampfraum (87) einer zweiten Stufe (90) überführt wird, der durch Kondensationswände (37) begrenzt ist, an denen der Dampf kondensiert und an die auf der dem ersten Dampfraum (87) gegenüberliegenden Seite jeweils ein die aufzukonzentrierende Flüssigkeit (20) aus dem Strömungskanal (38) der ersten Stufe führender Strömungskanal (38) angrenzt, der auf der der betreffenden Kondensationswand (37) gegenüberliegenden Seite wieder durch eine Membranwand (36) begrenzt ist, durch die die aufzukonzentrierende Flüssigkeit (20) von einem zweiten Dampfraum (89) dieser zweiten Stufe (90) getrennt wird,
der Absolutdruck der in den beiden Stufen (86, 90) vorhandenen aufzukonzentrierenden Flüssigkeit (20) bis zu ihrem zu ihrer Temperatur korrespondierenden Siededampfdruck abgesenkt wird,
in den beiden Stufen (86, 90) jeweils der Druck in dem der aufzukonzentrierenden Flüssigkeit (20) über die Membranwand (36) benachbarten zweiten Dampfraum (83, 89) geringer gewählt wird als der Umgebungsdrucks,
in den beiden Stufen (86, 90) jeweils der Unterdruck in diesem zweiten Dampfraum (83, 89) zumindest im wesentlichen dem Dampfdruck der über die Membranwand (36) benachbarten aufzukonzentrierenden Flüssigkeit (20), erhöht durch den sich beim Strömen des Dampfes durch die Membranwand (36) ergebenden Differenzdruck, entspricht,
in wenigstens den beiden Stufen (86, 90) eine jeweilige Kondensation und Verdampfung stattfindet, wobei die Kondensation und Verdampfung in einer jeweiligen weiteren Stufe auf einem niedrigeren Druckniveau und Temperaturniveau als in der jeweiligen vorangehenden Stufe erfolgt,
der Dampf aus dem zweiten Dampfraum (83) der letzten Stufe (90) über einen Verbindungskanal (92) in einen Dampfraum (88) eines Kondensators (30) überführt wird,
mittels eines Vakuumsystems (55) im Dampfraum (11) des Dampferzeugers (80), im jeweiligen ersten Dampfraum (81, 87) der Stufen (86, 90) und im Dampfraum (88) des Kondensators (30) ein Unterdruck aufgebracht wird, und
der entsprechenden Druckausgleich zwischen dem sich auf einem Unterdruck befindlichen jeweiligen zweiten Dampfraum (83, 89) und der aufzukonzentrierenden Flüssigkeit (20) über eine Verbindungsleitung (16) zwischen der zugeführten aufzukonzentrierenden Flüssigkeit (20) und dem Verbindungskanal (92) erzeugt wird.

2. Mehrstufige Membrandestillationsvorrichtung, umfassend die nachfolgend im Zusammenhang mit ihrer Funktionsweise aufgeführten Vorrichtungsteile, bei der einem ersten Dampfraum (81) einer ersten Stufe (86) Dampf aus einem Dampfraum (11) eines einen unabhängigen Flüssigkeitskreislauf aufweisenden Dampferzeugers (80) zugeführt ist, der an den ersten Dampfraum (81) begrenzenden Kondensationswänden (37) kondensiert, auf der dem ersten Dampfraum (81) gegenüberliegenden Seite der Kondensationswände grenzt jeweils ein eine aufzukonzentrierende Flüssigkeit (20) führender Strömungskanal (38) an, der auf der der betreffenden Kondensationswand (37) gegenüberliegenden Seite durch eine dampfdurchlässige flüssigkeits- oder wasserdichte Membranwand (36) begrenzt ist, durch die die aufzukonzentrierende Flüssigkeit (20) von einem zweiten Dampfraum (83) dieser ersten Stufe (86) getrennt ist, wobei der aus der aufzukonzentrierenden Flüssigkeit (20) entstehende Dampf durch die Membranwand (36) in den zweiten Dampfraum (83) hindurchtritt, und zur Einstellung des Absolutdruckes der aufzukonzentrierenden Flüssigkeit (20) auf diese ein Unterdruck aufgegeben ist, der den Absolutdruck der Flüssigkeit (20) absenkt, insbesondere zur Durchführung des Verfahrens nach Anspruch 1,
wobei
der Dampf aus dem zweiten Dampfraum (83) der ersten Stufe (86) in einen ersten Dampfraum (87) einer zweiten Stufe (90) überführt ist, der durch Kondensationswände (37) begrenzt ist, an denen der Dampf kondensiert und an die auf der dein ersten Dampfraum (87) gegenüberliegenden Seite jeweils ein die aufzukonzentrierende Flüssigkeit (20) aus dem Strömungskanal (38) der ersten Stufe führender Strömungskanal (38) angrenzt, der auf der der betreffenden Kondensationswand (37) gegenüberliegenden Seite wieder durch eine Membranwand (36) begrenzt ist, durch die die aufzukonzentrierende Flüssigkeit (20) von einem zweiten Dampfraum (89) dieser zweiten Stufe (90) getrennt ist, der Absolutdruck der in den beiden Stufen (86, 90) vorhandenen aufzukonzentrierenden Flüssigkeit (20) bis zu ihrem zu ihrer Temperatur korrespondierenden Siededampfdruck abgesenkt ist, in den beiden Stufen (86, 90) jeweils der Druck in dem der aufzukonzentrierenden Flüssigkeit (20) über die Membranwand (36) benachbarten zweiten Dampfraum (83, 89) geringer gewählt ist als der Umgebungsdruck, in den beiden Stufen (86, 90) jeweils der Unterdruck in diesem zweiten Dampfraum (83, 89) zumindest im wesentlichen dem Dampfdruck der über die Membranwand (36) benachbarten aufzukonzentrierenden Flüssigkeit (20), erhöht durch den sich beim Strömen des Dampfes durch die Membranwand (36) ergebenden Differenzdruck, entspricht, wenigstens die beiden Stufen (86, 90) für eine jeweilige Kondensation und Verdampfung vorgesehen sind, wobei die Kondensation und Verdampfung in einer jeweiligen weiteren Stufe auf einem niedrigeren Druckniveau und Temperaturniveau als in der jeweils vorangehenden Stufe erfolgt, der Dampf aus dem zweiten Dampfraum (83) der letzten Stufe (86) über einen Verbindungskanal (92) in einen Dampfraum (88) eines Kondensators (30) überführt wird, ein Vakuumsystem (55) zum Aufbringen eines Unterdrucks im Dampfraum (11) des Dampferzeugers (80), im jeweiligen ersten Dampfraum (81, 87) der Stufen (86, 90) und im Dampfraum (88) des Kondensators (30) vorgesehen ist, und zur Erzielung des entsprechenden Druckausgleichs zwischen dem sich auf einem Unterdruck befindlichen jeweiligen zweiten Dampfraum (83, 89) und der aufzukonzentrierenden Flüssigkeit (20) eine Verbindungsleitung (16) zwischen der zugeführten aufzukonzentrierenden Flüssigkeit (20) und dem Verbindungskanal (92) vorgesehen ist.

3. Vorrichtung nach Anspruch 2,
**dadurch gekennzeichnet , dass** die in den Unterdruckbereich eintretenden und aus diesem austretenden Leitungen (22, 25, 27) so mit Vorlagebehälter versehen sind, dass die in diesen Vorlagebehälter enthaltenen Flüssigkeiten (20, 40, 41) den Unterdruck in der Membrandestillationsvorrichtung über U-Rohre (23, 28, 29) gegen den Umgebungsdruck abtrennen.

4. vorrichtung nach Anspruch 2 oder 3,
**dadurch gekennzeichnet, dass** die Flüssigkeiten (20, 40, 41), die in dem Unterdruckbereich eintreten und aus diesem austreten, über mechanische Verschlüsse vom Umgebungsdruck abgetrennt sind.

## Claims

1. A multistage membrane distillation process, wherein vapor from a vapor space (11) of a vapor generator (80) having an independent liquid circuit is supplied to a first vapor space (81) of a first stage (86), the vapor condensing at condensation walls (37) bounding the first vapor space (81), wherein a respective flow passage (38) conducting a liquid (20) to be concentrated is adjacent to the side of the condensation walls opposite to the first vapor space (81) and is bounded at the side opposite to the relevant condensation wall (37) by a vapor permeable, liquid-tight or water-tight membrane wall (36) by which the liquid (20) to be concentrated is separated from a second vapor space (83) of this first stage (86), with the vapor arising from the liquid (20) to be concentrated passing through the membrane wall (36) into the second vapor space (83) and
a underpressure is imparted to the liquid (20) to be concentrated to set the absolute pressure thereof, with the underpressure lowering the absolute pressure of the liquid (20) to be concentrated, wherein
the vapor from the second vapor space (83) of the first stage (86) is transferred into a first vapor space (87) of a second stage (90) which is bounded by condensation walls (37) on which the vapor condenses and at which a respective flow passage (38) conducting the liquid (20) to be concentrated from the flow channel (38) of the first stage is adjacent at the side opposite to the first vapor space (87), said flow passage again being bounded at the side lying opposite to the relevant condensation wall (37) by a membrane wall (36) by which the liquid (20) to be concentrated is separated from a second vapor space (89) of this second stage (90),
the absolute pressure of the liquid (20) to be concentrated present in the two stages (86, 90) is lowered to its boiling vapor pressure corresponding to its temperature,
in the two stages (86, 90), the respective pressure in the second vapor space (83, 89) adjacent to the liquid (20) to be concentrated via the membrane wall (36) is selected to be lower than the environmental pressure,
in each of the two stages (86, 90) the underpressure in this second vapor space (83, 89) corresponds at least substantially to the vapor pressure of the liquid (20) to be concentrated adjacent via the membrane wall (36), increased by the differential pressure resulting on the flow of the vapor through the membrane wall (36),
a respective condensation and vaporization takes place in at least the two stages (86, 90), wherein the condensation and vaporization takes place in a respective further stage at a lower pressure level and temperature level than in the respectively preceding stage,
the vapor from the second vapor space (83) of the last stage (90) is transferred via a communication passage (92) into a vapor space (88) of a condenser (30),
by means of a vacuum system (55), a underpressure is applied in the vapor space (11) of the vapor generator (80 in the respective first vapor space (81, 87) of the stages (86, 90) and in the vapor space (88) of the condenser (30), and
the corresponding pressure equalization between the respective second vapor space (83, 89) at a underpressure and the liquid (20) to be concentrated is generated via a communication line (16) between the supplied liquid (20) to be concentrated and the communication passage (92).

2. A multistage membrane distillation apparatus comprising the apparatus parts listed below in connection with their functionality, wherein vapor from a vapor space (11) of a vapor generator (80) having an independent liquid circuit is supplied to a first vapor space (81) of a first stage (86), the vapor condensing at condensation walls (37) bounding the first vapor space (81), wherein a respective flow passage (38) conducting a liquid (20) to be concentrated is adjacent to the side of the condensation walls opposite to the first vapor space (81) and is bounded at the side opposite to the relevant condensation wall (37) by a vapor permeable, liquid-tight or water-tight membrane (36) by which the liquid (20) to be concentrated is separated from a second vapor space (83) of this first stage (86), with the vapor arising from the liquid (20) to be concentrated passing through the membrane wall (36) into the second vapor space (83) and with a underpressure being imparted to the liquid (20) to be concentrated for the setting of the absolute pressure thereof, with the underpressure lowering the absolute pressure of the liquid (20), in particular for carrying out the process in accordance with claim 1,
wherein
the vapor from the second vapor space (83) of the first stage (86) is transferred into a first vapor space (87) of a second stage (90) which is bounded by condensation walls (37) on which the vapor condenses and at which a respective flow passage (38) conducting the liquid (20) to be concentrated from the flow channel (38) of the first stage is adjacent at the side opposite to the first vapor space (87), said flow passage again being bounded at the side opposite to the relevant condensation wall (37) by a membrane wall (36) by which the liquid (20) to be concentrated is separated from a second vapor space (89) of this second stage (90), the absolute pressure of the liquid (20) to be concentrated which is present in the two stages (86, 90) is lowered to its boiling vapor pressure corresponding to its temperature, in each of the two stages (86, 90) the pressure in the second vapor space (83, 89) adjacent to the liquid (20) to be concentrated via the membrane wall (36) is selected to be lower than the environmental pressure, in the two stages (86, 90) in each case the underpressure in this second vapor space (83, 89) corresponds at least substantially to the vapor pressure of the liquid (20) to be concentrated adjacent via the membrane wall (36), increased by the differential pressure resulting on the flow of the vapor through the membrane wall (36), at least the two stages (86, 90) are provided for a respective condensation and vaporization, wherein the condensation and vaporization takes place in a respective further stage at a lower pressure level and temperature level than in the respective preceding stage, the vapor from the second vapor space (83) of the last stage (86) is transferred via a communication passage (92) into a vapor space (88) of a condenser (30), a vacuum system (55) is provided for the application of a underpressure in the vacuum space (11) of the vacuum generator (80) in the respective first vapor space (81, 87) of the stages (86, 80) and in the vapor space (88) of the condenser (30) and a communication line (16) is provided between the supplied liquid (20) to be concentrated and the communication passage (92) to achieve the corresponding pressure equalization between the respective second vapor space (83, 89) at a underpressure and the liquid (20) to be concentrated).

3. An apparatus in accordance with claim 2, **characterized in that** the lines (22, 25, 27) entering into the underpressure region and emerging from it are so provided with recipients that the liquids (20, 40, 41) contained in these recipients separate the underpressure in the membrane distillation apparatus from the environmental pressure via U-tubes (23, 28, 29).

4. An apparatus in accordance with claim 2 or claim 3, **characterized in that** the liquids (20, 40, 41) which enter into the underpressure region and emerge from it are separated from the environmental pressure via mechanical closures.

## Revendications

1. Procédé de distillation à membrane à plusieurs étages, dans lequel on admet à une première chambre à vapeur (81) d'un premier étage (86) de la vapeur provenant d'une chambre à vapeur (11) d'un générateur de vapeur (80) présentant un circuit de liquide indépendant, ladite vapeur étant condensée sur les parois de condensation (37), limitant la première chambre à vapeur (81), un canal d'écoulement (38) respectif, qui mène un liquide à concentrer (20) jouxtant le côté, opposé à la première chambre à vapeur (81), des parois de condensation, canal qui est limité du côté opposé à la paroi de condensation concernée (37) par une paroi à membrane perméable à la vapeur et étanche aux liquides ou à l'eau (36), paroi par laquelle le liquide à concentrer (20) est séparé d'une seconde chambre à vapeur (83) de ce premier étage (86), et la vapeur qui se produit à partir du liquide à concentrer (20) traverse à travers la paroi à membrane (36) pour entrer dans la seconde chambre à vapeur (83), et
pour régler la pression absolue du liquide à concentrer (20) une dépression est appliquée à celui-ci, qui réduit la pression absolue du liquide à concentrer (20),
dans lequel
la vapeur provenant de la seconde chambre à vapeur (83) du premier étage (86) est transférée dans une première chambre à vapeur (87) d'un second étage (90), chambre qui est limitée par des parois de condensation (37) sur lesquelles la vapeur se condense et, un canal d'écoulement (38) respectif, qui mène le liquide à concentrer (20) provenant du canal d'écoulement (38) du premier étage, jouxtant le côté opposé à la première chambre à vapeur (87), canal qui est à nouveau limité, du côté opposé à la paroi de condensation concernée (37) par une paroi à membrane (36) par laquelle le liquide à concentrer (20) est séparé d'une seconde chambre à vapeur (89) de ce second étage (90),
la pression absolue du liquide (20) à concentrer présent dans les deux étages (86, 90) est abaissée jusqu'à sa pression de vapeur saturée correspondant à sa température,
on choisit dans les deux étages (86, 90) la pression respective dans la seconde chambre à vapeur (83, 89) voisine du liquide à concentrer (20) via la paroi à membrane (36) d'une valeur plus faible que la pression environnante,
dans les deux étages (86, 90), la dépression respective dans cette seconde chambre à vapeur (83, 89) correspond au moins essentiellement à la pression de vapeur du liquide à concentrer (20) voisin via la paroi à membrane (36), augmentée de la pression différentielle résultant lors de l'écoulement de la vapeur à travers la paroi à membrane (36),
au moins dans les deux étages (86, 90) il se produit respectivement une condensation et une évaporation, telles que la condensation et l'évaporation dans un autre étage respectif se produit à un niveau de pression et un niveau de température plus faibles que dans l'étage respectif précédent,
la pression provenant de la seconde chambre à vapeur (83) du dernier étage (90) est transmise via un canal de liaison (92) vers une chambre à vapeur (88) d'un condenseur (30),
une dépression est appliquée au moyen d'un système à vide (55) dans la chambre à vapeur (11) du générateur de vapeur (80), dans la première chambre à vapeur respective (81, 87) des étages (86, 90) et dans la chambre à vapeur (88) du condenseur (30), et
on produit la compensation de pression correspondante entre la seconde chambre à vapeur respective (83, 89) qui se trouve sous dépression et le liquide à concentrer (20) via une conduite de liaison (16) entre le liquide à concentrer (20) amené et le canal de liaison (92).

2. Appareil de distillation à membrane à plusieurs étages comprenant les parties d'appareillage énoncées dans ce qui suit en association avec leur mode de fonctionnement, dans lequel dans lequel on admet à une première chambre à vapeur (81) d'un premier étage (86) de la vapeur provenant d'une chambre à vapeur (11) d'un générateur de vapeur (80) présentant un circuit de liquide indépendant, ladite vapeur étant condensée sur les parois de condensation (37), limitant la première chambre à vapeur (81), un canal d'écoulement (38) respectif, qui mène un liquide à concentrer (20) jouxtant le côté, opposé à la première chambre à vapeur (81), des parois de condensation, canal qui est limité du côté opposé à la paroi de condensation concernée (37) par une paroi à membrane perméable à la vapeur et étanche aux liquides ou à l'eau (36), paroi par laquelle le liquide à concentrer (20) est séparé d'une seconde chambre à vapeur (83) de ce premier étage (86), et la vapeur qui se produit à partir du liquide à concentrer (20) traverse à travers la paroi à membrane (36) pour entrer dans la seconde chambre à vapeur (83), et pour régler la pression absolue du liquide à concentrer (20) une dépression est appliquée à celui-ci, qui réduit la pression absolue du liquide (20), en particulier pour mettre en oeuvre le procédé selon la revendication 1,
dans lequel
la vapeur provenant de la seconde chambre à vapeur (83) du premier étage (86) est transférée dans une première chambre à vapeur (87) d'un second étage (90), chambre qui est limitée par des parois de condensation (37) sur lesquelles la vapeur se condense et, un canal d'écoulement (38) respectif, qui mène le liquide à concentrer (20) provenant du canal d'écoulement (38) du premier étage, jouxtant le côté opposé à la première chambre à vapeur (87), canal qui est à nouveau limité, du côté opposé à la paroi de condensation concernée (37) par une paroi à membrane (36) par laquelle le liquide à concentrer (20) est séparé d'une seconde chambre à vapeur (89) de ce second étage (90),
la pression absolue du liquide (20) à concentrer présent dans les deux étages (86, 90) est abaissée jusqu'à sa pression de vapeur saturée correspondant à sa température,
dans les deux étages (86, 90) la pression respective dans la seconde chambre à vapeur (83, 89) voisine du liquide à concentrer (20) via la paroi à membrane (36) est choisie d'une valeur plus faible que la pression environnante,
dans les deux étages (86, 90), la dépression respective dans cette seconde chambre à vapeur (83, 89) correspond au moins essentiellement à la pression de vapeur du liquide à concentrer (20) voisin via la paroi à membrane (36), augmentée de la pression différentielle résultant lors de l'écoulement de la vapeur à travers la paroi à membrane (36),
au moins dans les deux étages (86, 90) il se produit respectivement une condensation et une évaporation, telles que la condensation et l'évaporation dans un autre étage respectif se produit à un niveau de pression et un niveau de température plus faibles que dans l'étage respectif précédent,
la pression provenant de la seconde chambre à vapeur (83) du dernier étage (90) est transmise via un canal de liaison (92) vers une chambre à vapeur (88) d'un condenseur (30),
il est prévu un système à vide (55) pour appliquer une dépression dans la chambre à vapeur (11) du générateur de vapeur (80), dans la première chambre à vapeur respective (81, 87) des étages (86, 90) et dans la chambre à vapeur (88) du condenseur (30), et
pour atteindre la compensation de pression correspondante entre la seconde chambre à vapeur respective (83, 89) qui se trouve sous dépression et le liquide à concentrer (20) il est prévu une conduite de liaison (16) entre le liquide à concentrer (20) amené et le canal de liaison (92).

3. Appareil selon la revendication 2,
**caractérisé en ce que** les conduites (22, 25, 27) qui pénètrent dans la zone en dépression et qui sortent de celle-ci sont dotées de réservoirs préliminaires, et **en ce que** les liquides (20, 40, 41) contenus dans ces réservoirs préliminaires séparent la dépression dans l'appareil de distillation à membrane par rapport à la pression environnante au moyen de tubes en U (23, 28, 29).

4. Appareil selon la revendication 2 ou 3,
**caractérisé en ce que** les liquides (20, 40, 41) qui entrent dans la zone en dépression et qui sortent de celle-ci sont séparés de la pression environnante via des obturateurs mécaniques.
